# EUROPÄISCHE PATENTSCHRIFT

(11) **EP 0 599 810 B1**
(45) Veröffentlichungstag und Bekanntmachung des Hinweises auf die Patenterteilung: **03.07.1996**
(21) Anmeldenummer: 94100531.6
(22) Anmeldetag: 05.04.1990
(51) Int. Cl.: B60R 22/46, B60R 22/18

(54) **Vorrichtung zum Straffen eines Sicherheitsgurtes in einem Fahrzeug, insbesondere Kraftfahrzeug**
Device for tensioning a safety belt in a vehicle, in particular a motor vehicle
Dispositif pour tendre une ceinture de sécurité dans un véhicule, en particulier dans un véhicule automobile

(30) Priorität: 13.05.1989 DE 3915723; 26.09.1989 DE 3932090; 03.10.1989 DE 3933009; 05.10.1989 DE 3933276
(43) Veröffentlichungstag der Anmeldung: 01.06.1994
(62) Teilanmeldung aus: 90106535.9
(73) Patentinhaber: HS Technik und Design Technische Entwicklungen GmbH, D-82234 Wessling (DE)
(72) Erfinder: Specht, Martin, D-82340 Feldafing (DE); Meyer, Rudolf, D-85235 Odelzhausen (DE)
(74) Vertreter: Nöth, Heinz, Dipl.-Phys.

(56) Entgegenhaltungen:
- EP-A- 0 305 765
- EP-A- 0 306 299
- DE-U- 7 303 796
- DE-U- 8 813 979

## Beschreibung

Die Erfindung betrifft eine Vorrichtung nach dem Oberbegriff des Patentanspruchs 1.

Bei einer derartigen aus der DE 88 13 979 U1 bekannten Vorrichtung bilden Sensor, Verriegelungseinrichtung und als Kraftspeicher wirkende Schraubendruckfeder jeweils separat vorgesehene Funktionsgruppen.

Aus der EP 01 95 268 A2 ist als Kraftspeicher ein an seinem einen Ende eingespannter Torsionsstab bekannt, der sich quer zur Fahrzeuglängsrichtung erstreckt. Das freie gegenüber dem eingespannten Ende verdrehte Ende des Torsionsstabes ist über einen Hebel mit einem schwenkbaren Teil verbunden, an welchem das Gurtschloß angelenkt ist. Im normalen Fahrbetrieb liegt der Hebel an einem ortsfesten Anschlag an, wodurch eine Verriegelung für den Torsionsfederstab gebildet wird. Bei einer extremen Fahrzeuggeschwindigkeitsänderung (Crashbelastung) bewegt sich das verdrehte freie Ende des Torsionsstabes, wodurch der Hebel vom Anschlag entfernt wird und die Verriegelung gelöst wird. Das freie Ende des Torsionsstabes kann sich verdrehen, und diese Drehbewegung wird als Rückstrammbewegung auf den Sicherheitsgurt übertragen. Die Sensorfunktion und die Rückstrammbewegung werden bei der bekannten Vorrichtung an ein und demselben Federende erzeugt.

Aufgabe der Erfindung ist es, eine Vorrichtung der eingangs genannten Art zu schaffen, bei der für das funktionsgerechte Arbeiten der Vorrichtung eine verringerte Anzahl an Einzelteilen erforderlich ist und das Ansprechen der Sensorik direkt auf die Verriegelung wirkt.

Diese Aufgabe wird erfindungsgemäß durch die kennzeichnenden Merkmale des Patentanspruches 1 gelöst.

Hierbei läßt sich eine kompakte Anordnung von Sensorik und Kraftspeicher, der durch die Druckfeder gebildet wird, erreichen. Ferner wird durch die Doppelfunktion, welche die Druckfeder ausübt, eine direkte Übertragung der Sensorfunktion auf die Verriegelung erreicht und damit in kürzest möglicher Zeit ein Ansprechen des freigesetzten Kraftspeichers, der durch die gespannte Druckfeder gebildet wird, bewirkt. Der am Unfall beteiligte Fahrzeuginsasse nimmt frühzeitig am Verzögerungsverlauf des Unfallfahrzeuges teil, und die Unfallschwere wird für den Fahrzeuginsassen reduziert. Es kann eine vorhandene Gurtlose von bis zu 180 mm zurückgestrammt werden. Das Sicherheits-Gurtdreieck im Schulter- und Beckengurtbereich wird bei Crashbeginn sehr kurzzeitig zurückgestrammt, so daß eine Vorverlagerung des Fahrzeuginsassen beim Unfall wirkungsvoll verhindert wird.

In vorteilhafter Weise können Sensorik und Kraftspeicher und - wie im einzelnen noch erläutert wird - die Rücklaufsperre in kompakter Bauweise in einem einfach ausgebildeten Gehäuse, bevorzugterweise rohrförmigen Gehäuse, untergebracht werden. Das rohrförmige Gehäuse läßt sich in einfacher Weise mit dem Fahrzeugsitz, insbesondere mit der sitzbeweglichen Ankerschiene, an der Sitzinnenseite (tunnelseitig) befestigen. Dabei kann das Gehäuse im Sitzkissenunterteil untergebracht werden.

Ferner kann am Gehäuseäußern eine Seilumlenkeinrichtung, insbesondere in Form von Seilumlenkblechen, vorgesehen sein, durch die zur Unterstützung eines sitzintegrierten Einbaus ohne Änderung am Sitz praktisch für alle Fahrzeugtypen das Rückstrammseil in einfacher Weise von der Rückstrammvorichtung zum Gurtschloß geführt werden kann.

Insbesondere bei einem rohrförmigen Gehäuse ist die Druckfeder als Schraubendruckfeder ausgebildet. Diese Schraubendruckfeder erstreckt sich bevorzugt in Fahrtrichtung des Fahrzeugs, wobei sich in dieser Richtung die Verriegelungseinrichtung, in welche in bevorzugter Weise der Sensor bzw. ein Teil des Sensors integriert ist, ebenfalls in Längsrichtung anschließt, damit die Längsbewegung der Druckfeder im Crashfall voll auf die Sensorik übertragen wird.

In vorteilhafter Weise ist die Verriegelung zwischen dem Zugseil und der gespannten Druckfeder eingebaut, wobei die Verriegelung sich mit der Druckfeder im Crashfall mitbewegt. Ferner ist, wie schon erwähnt, in die Verriegelung ein Sensorteil integriert, der mit einem im Gehäuse ortsfesten zweiten Sensorteil zusammenwirkt. Hierzu liegen in Ruhestellung die beiden Sensorteile aneinander, und bei einer im Crashfall ausgelösten Bewegung von Druckfeder und Verriegelung lösen sich die beiden Sensorteile voneinander, wodurch auch das Lösen der Verriegelung bewirkt wird. In vorteilhafter Weise kann hierbei die Druckfeder auf die Verriegelung eine entriegelnde Kraft ausüben.

Die sich hierbei abspielenden Wechselwirkungen zwischen Druckfeder, Sensorik und Verriegelung erfolgen auf dem kürzest möglichen Weg und daher in kürzest möglichen Zeiträumen, so daß ein rasches Einleiten der Rückstrammbewegung, die auf das Zugseil wirkt, erreicht wird.

Ferner ist in vorteilhafter Weise das Zugseil durch eine Rücklaufsperre, die in einer zur Rückstrammbewegung entgegengesetzten Bewegungsrichtung sperrend wirkt, gesichert. Diese Rücklaufsperre kann für einen kompakten Aufbau ein im rohrförmigen Gehäuse koaxial angeordnetes Rohr aufweisen, in welchem eine mit dem Zugseil verbundene Rastellipse in Ruhestellung und Rückstrammrichtung in definierter Schräglage klemmfrei geführt ist, wobei dann diese Rastellipse gegen eine entgegengesetzte Bewegungsrichtung durch Kippen in eine Klemm-Raststellung gebracht werden kann. Auf diese Weise erreicht man eine Rücklaufsperrewirkung für das Zugseil. In vorteilhafter Weise kann hierbei in dem Zwischenraum zwischen dem rohrförmigen Gehäuse und dem im Innern angeordneten Rohr (Bremsrohr) die schraubenförmig ausgebildete Druckfeder geführt sein. Durch den radial ineinander liegenden Aufbau von Druckfeder, die die Doppelfunktion als Kraftspeicher und Trägheitsmasse ausübt, und Rücklaufsperre wird der angestrebte kompakte Aufbau der Rückstrammvorrichtung erreicht, so daß sie in einem einfachen rohrförmigen Gehäuse untergebracht werden kann.

Die Rastellipse kann in vorteilhafter Weise plattenförmig ausgebildet sein und zwischen zwei mit dem Zugseil verbundenen Verdickungen geführt sein, wobei die eine Verdickung, die beispielsweise als zur Verriegelung gehöriger Riegelbolzen ausgebildet sein kann, eine gegenüber der Gehäuseachse schräg verlaufende Führungsfläche aufweist, welche die Rastellipse in der Ruhestellung und bei der Rückstrammbewegung in definierter Schräglage klemmfrei im Bremsrohr führt. Die andere Verdickung kann in vorteilhafter Weise durch eine Seilverpressung gebildet sein. Wenn nach der Rückstrammbewegung ein in entgegengesetzter Richtung gerichteter Crashzug am Zugseil zur Wirkung kommt, wird die Rastellipse in die Klemm-Raststellung gekippt. Diese kann in vorteilhafter Weise durch die als Seilverpressung ausgebildete Verdickung geschehen.

Auf diese Weise erreicht man eine stufenlose Rücklaufverriegelung für das Rückstrammseil, wobei das Kippen in die Klemm-Raststellung einsteuerungsverlustfrei erfolgt.

Damit der H-Punkt (Hüftpunkt), in welchem der Beckengurtbereich und der Schultergurtbereich bei mit dem Gurtschloß verriegeltem Sicherheitsgurt zusammenlaufen, immer die gleiche Lage einnimmt, ist es erwünscht, daß das Gurtschloß zusammen mit dem Fahrzeugsitz verstellbar ist. Um die Rückstrammbewegungskomponente vom Rückstrammer über das zum Gurtschloß laufende Zugseil problemlos weiterzuleiten, besteht eine Weiterbildung der Erfindung darin, daß
- das Gurtschloß und das direkt mit dem Gurtschloß verbundene Zugseil in einem Rückstrammschacht in einer Schachtführungsbahn bewegbar geführt sind;
- der Rückstrammschacht mit einer Seilumlenkeinrichtung verbunden ist, die zusammen mit dem Rückstrammer an einem mit dem Fahrersitz mitverstellbaren Sitzkonstruktionsteil befestigt ist; und
- von der Seilumlenkeinrichtung Rückhaltekräfte, die durch den Sicherheitsgurt vermittelt und über das Gurtschloß auf das Zugseil übertragen werden, aufgenommen und in den Sitzkonstruktionsteil eingeleitet sind.

In bevorzugter Weise ist die Seilumlenkeinrichtung als Umlenkblechkonstruktion ausgebildet, die entsprechend den Anforderungen geformt ist.

Hierdurch wird mit wenigen einfachen Konstruktionselementen eine kompakte Bauweise erreicht, die einen problemlosen sitzintegrierten Einbau der Rückstrammvorrichtung gewährleistet. Dabei ist außerdem erreicht, daß durch die Seilumlenkeinrichtung eine crashsichere Aufnahme der Rückhaltekräfte des Sicherheitsgurtes erreicht wird und diese Kräfte in den verstellbaren Sitzkonstruktionsunterbau eingeleitet werden können. Hierdurch wird auch eine im bevorzugt mechanisch ausgebildeten Rückstrammer vorgesehene Rücklaufsperre entlastet. Diese Rücklaufsperre gewährleistet, daß das rückgestrammte Zugseil in zur Rückstrammrichtung entgegengesetzten Richtung blokkiert ist. Bevorzugt wird die Rückstrammvorrichtung an einer verstellbaren Ankerschiene, bevorzugt an der inneren, d.h. tunnelseitigen Ankerschiene des Fahrzeugsitzes gelagert. Durch diesen sitzintegrierten Einbau der Rückstrammvorrichtung sind keinerlei Änderungen am Sitz erforderlich. Vielmehr kann die Rückstrammvorrichtung für alle vorhandenen Fahrzeugsitztypen zur Anwendung kommen. Durch die Rückstrammvorrichtung wird für den Rückstrammer die außerhalb des Rückstrammers erfolgende Zugseilführung und für die Führung des Gurtschlosses bei der Rückstrammbewegung eine Baueinheit gebildet, die insgesamt am verstellbaren Fahrzeugsitz befestigt werden kann.

Der Rückstrammschacht, in welchem das umgelenkte Zugseil und das direkt mit dem Zugseil verbundene Gurtschloß geführt sind, kann insgesamt starr ausgebildet sein oder in Richtung der Rückstrammbewegung zusammenschiebbar sein.

In vorteilhafter Weise ist die Seilführungsbahn nach einer Seite hin offen. Auf diese Weise wird für das Zugseil in der Umlenkeinrichtung eine Ausweichmöglichkeit geschaffen, wenn beispielsweise auf das Kopfstück des Rückstrammschachtes ein Druck ausgeübt wird und dabei insbesondere bei dem balgartig zusammenziehbaren Rückstrammschacht das Zugseil in Rückstrammrichtung bewegt wird. Aufgrund der Steifigkeit des Zugseiles kann diese Bewegung bis in den Rückstrammer und auf die Sensorik des Rückstrammers übertragen werden, so daß eine Fehlauslösung der Sensorik hierdurch bewirkt werden kann. Dadurch, daß die Seilführungsbahn jedoch in einer Richtung entgegengesetzt zu der Richtung, in welcher die von der Seilführungsbahn aufgenommenen Kräfte wirken, geöffnet ist, kann das in der Seilführungsbahn liegende Zugseilstück ausweichen, so daß die Bewegung, welche bei einem Druck auf das Kopfstück des Rückstrammschachtes von dem im Rückstrammschacht befindlichen Seilstück ausgeführt wird, nicht bis in den Rückstrammer übertragen wird, sondern im Bereich der Umlenkeinrichtung hierfür eine Ausweichmöglichkeit geschaffen ist.

Anhand der Ausführungsbeispiele wird die Erfindung noch näher erläutert. Es zeigt:
- Fig. 1:: in perspektivischer und auseinandergezogener Darstellung die Einzelbestandteile eines ersten Ausführungsbeispiels der Erfindung;
- Fig. 2:: eine schnittbildliche Darstellung des Ausführungsbeispiels der Fig. 1 im zusammengebauten Zustand;
- Fig. 3:: in perspektivischer und auseinandergezogener Darstellung die Einzelbestandteile eines zweiten Ausführungsbeispiels der Erfindung;
- Fig. 4:: eine schnittbildliche Darstellung des in Fig. 3 dargestellten Ausführungsbeispiels im zusammengebauten Zustand;
- Fig. 5:: eine schnittbildliche Darstellung eines dritten Ausführungsbeispiels im zusammengebauten Zustand;
- Fig. 6:: eine modifizierte Ausführungsform für einen Sperrhebel, der bei den Ausführungsbeispielen zur Anwendung kommen kann;
- Fig. 7:: eine erste Ausführungsform für eine bei der Erfindung zum Einsatz kommende Zugseil-Umlenkeinrichtung;
- Fig. 8:: eine zweite Ausführung einer bei der Erfindung verwendeten Zugseil-Umlenkeinrichtung;
- Fig. 9:: eine gegenüber den Figuren 12 und 13 abgewandelte Ausführungsform einer Zugseil-Umlenkeinrichtung;
- Fig. 10;: ein weiteres Ausführungsbeispiel der Zugseil-Umlenkeinrichtung;
- Fig. 11 A-C:: ein Ausführungsbeispiel einer Verriegelungsvorrichtung, welche bei einem Rückstrammer der Erfindung zur Anwendung kommen kann;
- Fig. 12 A-C:: ein weiteres Ausführungsbeispiel für die erfindungsgemäße Rückstrammvorrichtung;
- Fig. 13:: ein weiteres Ausführungsbeispiel in perspektivischer Darstellung für die erfindungsgemäße Rückstrammvorrichtung, welche in eine mit dem Fahrzeugsitz bewegliche Oberschiene der Fahrzeugsitzkonstruktion einbaubar ist.

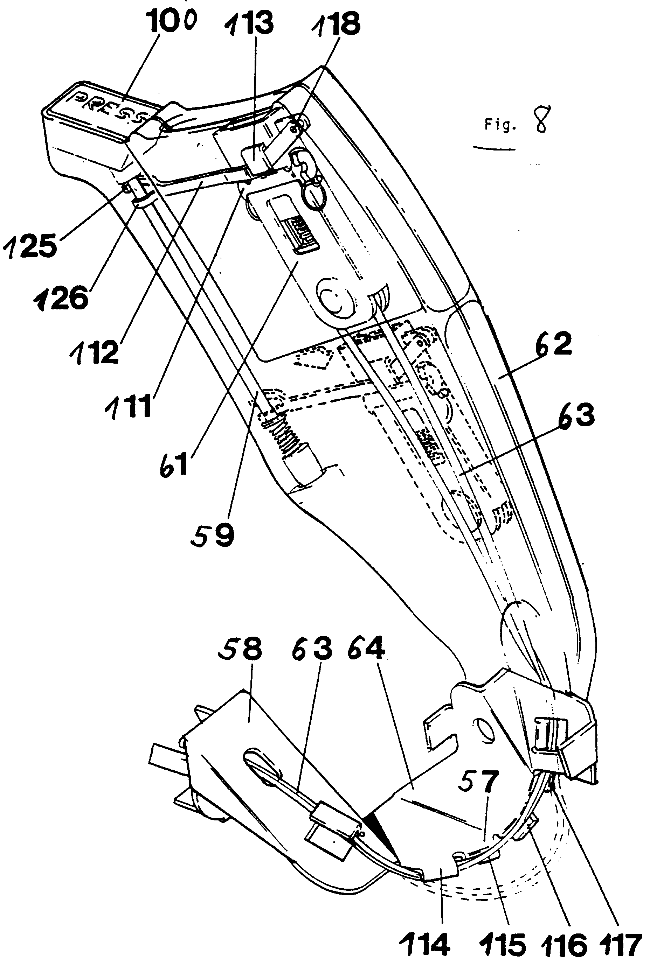

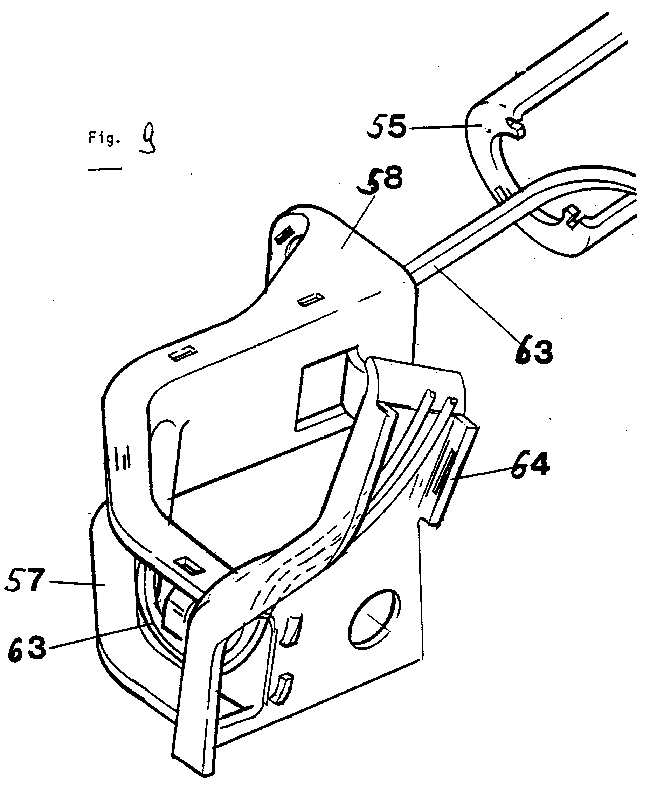

Die in den Figuren als Ausführungsbeispiele dargestellten Rückstrammvorrichtungen für einen Sicherheitsgurt eines Fahrzeugsitzes beinhalten einen Rückstrammer 55 (Fig. 7), der als mechanischer Rückstrammer ausgebildet ist. Dieser Rückstrammer 55 erzeugt im Falle einer extremen Fahrzeuggeschwindigkeitsänderung (Abbremsung oder Beschleunigung, Crashfall) eine Rückstrammbewegungskomponente, die über ein Zugseil 63 auf ein Gurtschloß 61 (Fig. 8) übertragen wird. Das Gurtschloß 61 ist direkt mit dem Zugseil 63 verbunden.

Bei dem in Fig. 8 dargestellten Ausführungsbeispiel sind das Gurtschloß 61 und der damit verbundene Teil des Zugseils 63 in einem Rückstrammschacht 62 entlang einer Schachtführungsbahn bewegbar geführt. Zwischen dem Rückstrammer 55 und dem Rückstrammschacht 62 ist eine Seilumlenkeinrichtung 64 vorgesehen. Diese besteht bevorzugt aus einer Blechkonstruktion und ist als Umlenkblech ausgebildet. In die Seilumlenkeinrichtung 64 ist für das Zugseil 63 eine Seilführungsbahn 57 eingeformt, wie ausführlich noch erläutert wird. Zunächst werden verschiedene bevorzugte Ausführungsformen des Rückstrammers 55 erläutert.

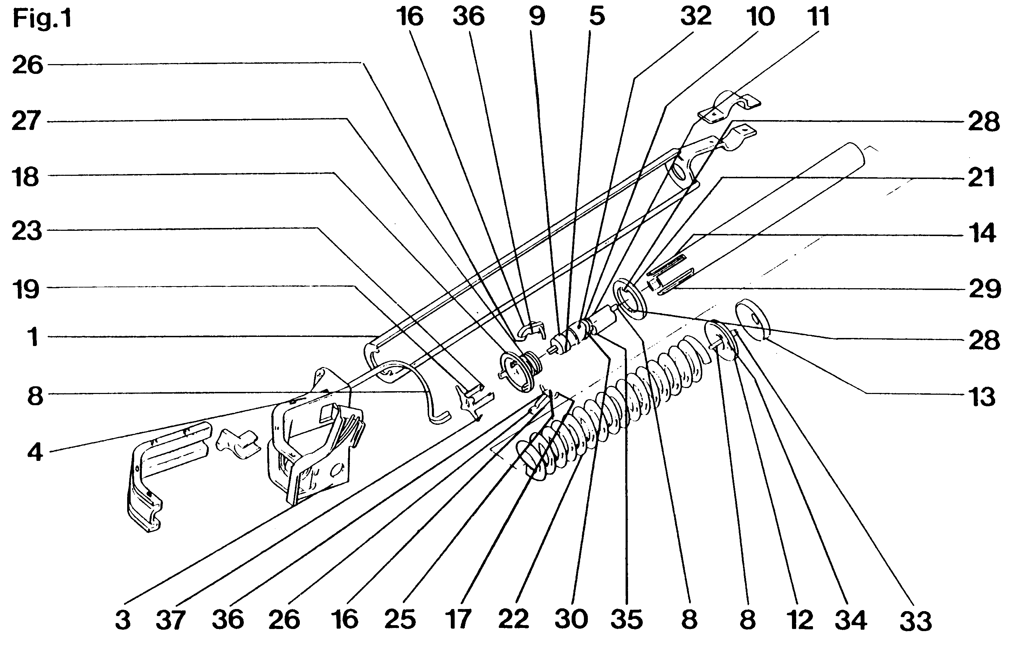

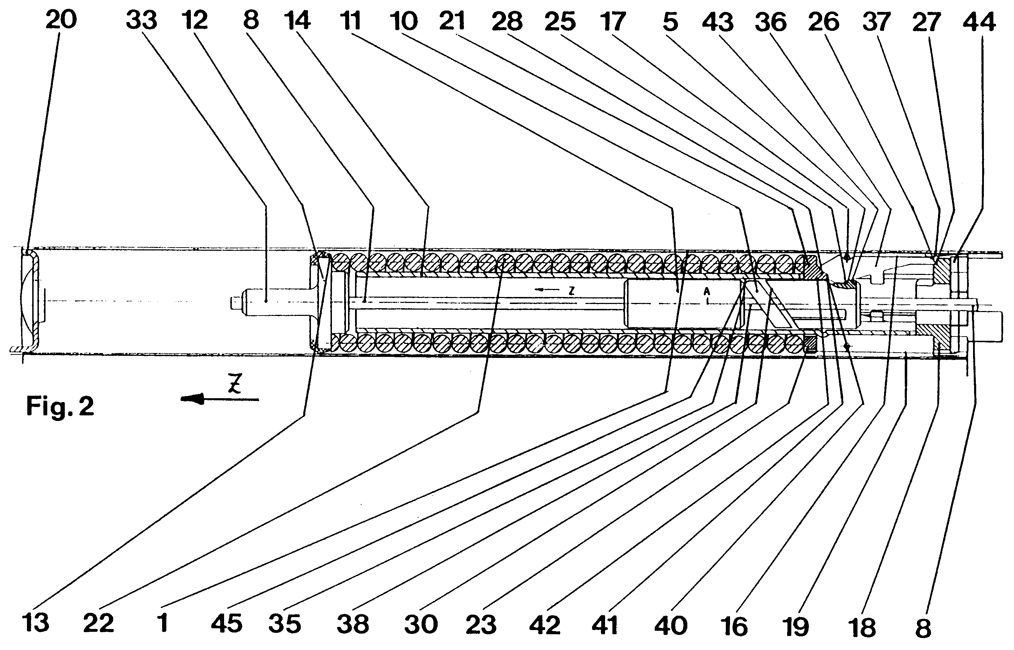

Das in den Figuren 1 und 2 dargestellte Ausführungsbeispiel eines mechanischen Rückstrammers für Sicherheitsgurt-Schlösser besitzt ein rohrförmiges Gehäuse 1, welches ein Schutzgehäuse darstellt, in welchem eine Druckfeder 22, die bei den Ausführungsbeispielen eine schraubenförmige Druckfeder ist, vorgesehen ist. Diese Druckfeder 22 wird zwischen zwei Federtellern 12 und 21 unter Vorspannung gehalten und bildet einen Kraftspeicher für eine eine Gurtlose beseitigende Rückstrammbewegung. Diese Rückstrammbewegung wird auf ein Zugseil 8 übertragen, mit welchem die Druckfeder 22 an ihrem einen Ende verbunden ist. Hierzu ist der Federteller 12 mit einem außen liegenden Quwetschnippel 33 versehen, mit welchem das Zugseil 8 nach Vorspannen der Druckfeder 22 durch Verpressen verbunden wird. Für eine einwandfreie Führung im rohrförmigen Gehäuse 1 wird der Federteller 12 von einem Gleitring 13 umgeben. Im Federteller 12 ist das Ende der Druckfeder 22 in einer Spiralpreß-Sicke 34 formschlüssig und verdrehungssicher aufgenommen.

Innerhalb der Druckfeder 22 ist ein weiteres Rohr, ein sogenanntes Bremsrohr 14, angeordnet. Das Bremsrohr 14 und die Druckfeder 22 sind ineinanderliegend um die gemeinsame Achse des rohrförmigen Schutzgehäuses 1 angeordnet. Hierdurch wird ein kompakter Aufbau gewährleistet.

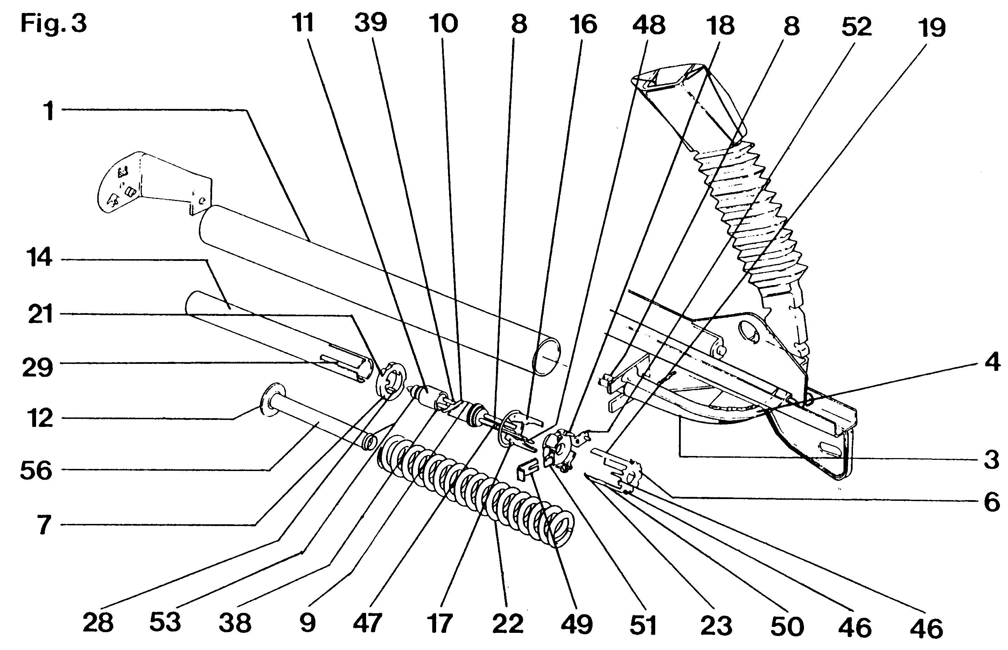

Innerhalb des Bremsrohres 14 ist eine Anordnung, welche eine Rücklaufsperre bildet, vorgesehen. Zur Rücklaufsperre gehören eine Rastellipse 10, die scheibenförmig ausgebildet ist und zwei Durchgangslöcher 32 aufweist. Mit Hilfe dieser elliptischen Durchgangslöcher 32 ist die Rastellipse 10 auf einem Doppelrückzugsseilstück mit den parallelen Seilsträngen 38 und 39, wie es in Fig. 3 dargestellt ist, angeordnet. Die Rastellipse 10 befindet sich beim dargestellten Ausführungsbeispiel zwischen zwei kolbenartigen Verdickungen, die mit dem Zugseil verbunden sind. Es handelt sich hier um einen Riegelbolzen 9 und eine Seilverpressung 11. Durch die Seilverpressung 11 werden die beiden Seilstränge 38 und 39 mit dem einzigen Zugseil 8, welches entlang der Achse des Bremsrohres 14 geführt ist, verbunden. Der Riegelbolzen 9 besitzt eine gegenüber der Gehäuseachse A schräg angeordnete Führungsfläche 30, durch welche die Rastellipse 10 in Ruhestellung, d.h. bei gespannter und verriegelter Druckfeder 22 und bei der Rückstrammbewegung in Richtung eines Pfeiles Z (Figur 2) in einer definierten Schräglage gegenüber der Achse A geführt wird. Hierdurch wird eine klemmfreie Führung innerhalb des Bremsrohres 14 bei der Rückstrammbewegung (Pfeilrichtung Z in Fig. 2) erreicht. In vorteilhafter Weise kann hierzu die Rastellipse 10 an ihrem Umfang zur Anpassung an die Innenwand des Bremsrohres 14 zylindrisch ausgebildet sein. Die definierte schräge Führung der Rastellipse 10 wird noch durch die beiden Seilstränge 38 und 39, welche durch die Durchgangslöcher 32 der Rastellipse gesteckt sind, unterstützt. Das der Seilverpressung 11 zugewandte Kantenteil 45 der Rastsellipse 10 ist beim dargestellten Ausführungsbeispiel abgerundet. (Fig. 2).

Das Bremsrohr 14 ist an seinem einen Ende mit Schlitzen 29 versehen und kraftschlüssig mit einem Abstützteller 18, der im einen Ende des rohrförmigen Gehäuses 1 fixiert ist, abgestützt. Die Schlitze 29 dienen zur funktionsgerechten Anordnung einer Verriegelung und Sensorik.

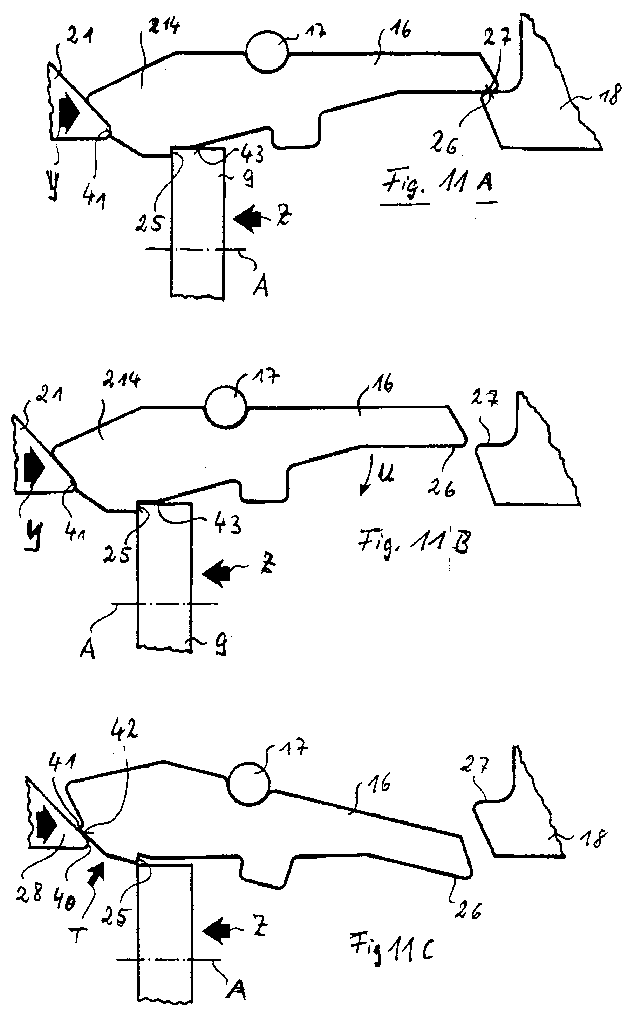

Die Verriegelung wird bei den dargestellten Ausführungsbeispielen von dem schon erwähnten Riegelbolzen 9 und einem oder mehreren Sperrhebeln 16 gebildet. Die Sperrhebel 16 (beim Ausführungsbeispiel der Fig. 1 zwei Sperrhebel 16 und beim Ausführungsbeispiel der Fig. 3 drei Sperrhebel) sind schwenkbar im Bereich der Schlitze 29 des Bremsrohres 14 angeordnet. Zur Abstützung der Sperrhebel 16 besitzt der Federteller 21 Stütznocken 28, die in die Schlitze 29 des Bremsrohres 14 ragen. Die Stütznocken besitzen nach außen weisende schräge Abstützflächen 42, die in schmale, radial sich erstreckende Abstützflächen 41, die radial innen liegen, übergehen (Fig. 11). An dieser so gestalteten Abstützfläche ist jeder der Sperrhebel 16 an der einen Seite gegenüber dem einen Federende der Druckfeder 22 abgestützt. An der anderen Abstützseite ist der Sperrhebel 16 am Riegelbolzen 9 abgestützt. Dieser besitzt hierzu in entsprechenden Ausnehmungen Abstützkanten 5, an denen die jeweiligen Sperrhebel 16 mit Riegelflächen 25 abgestützt sind. Wie beim Ausführungsbeispiel der Fig. 1 dargestellt, kann anstelle von mehreren in Ausnehmungen vorgesehenen Abstützschultern 5 auch eine umlaufende Abstützschulter 5 am Riegelbolzen 9 vorgesehen sein. Diese kann beispielsweise, wie in Fig. 1 dargestellt ist, in den Grundkörper des Riegelbolzens 9 eingeformt sein oder auf den als Gußteil ausgebildeten Grundkörper als Stahlring aufgepreßt sein. Bei dem in der Fig. 2 oder 11 A dargestellten verriegelten und vorgespannten Zustand der Druckfeder 22 (Ruhestellung) werden zwischen den Riegelflächen 25 und der Abstützfläche 40, mit welcher sich der Sperrhebel 16 an den Stütznocken 28 abstützt, die von der Druckfeder 22 in Zugrichtung bzw. Rückstrammrichtung (Pfeil Z in Fig. 2) ausgeübten Zugkräfte und die hierzu entgegengerichteten Druckkräfte vom Sperrhebel 16 aufgenommen. Da, wie insbesondere die Fig. 2 zeigt, der Abstützbereich zwischen den Abstütznocken 28 und dem Sperrhebel 16 gegenüber den gegeneinander abgestützten Riegelflächen 25 und Abstützschultern 5 in radialer Richtung nach außen versetzt liegt, d.h. die Abstützschultern 5 und Riegelflächen 25 radial mehr innen liegen als die Abstützbereiche 40-42 zwischen Stütznocken 28 und Sperrhebel 16, verbleibt ein Restdrehmoment, da die von der Druckfeder 22 in diesem Bereich ausgeübten Zug- und Druckkräfte nicht vollständig in diesem Sperrhebelbereich aufgenommen werden, sondern nur etwa 90 %. Das hieraus resultierende Restdrehmoment spielt eine Rolle zur Gestaltung der Sensorik, wie im einzelnen noch erläutert wird (Fig. 11 A-C).

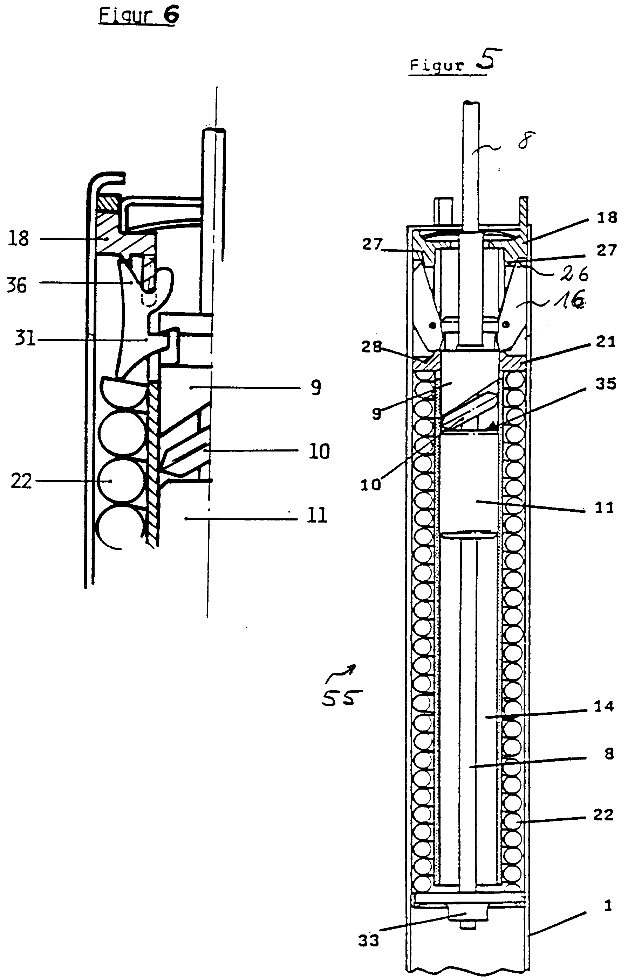

Die Sensorik wird bei den dargestellten Ausführungsbeispielen zum einen durch einen Sensorteil 26 gebildet, der Bestandteil des Sperrhebels 16 ist, und zum anderen durch einen am Gehäuse 1 fixierten Sensorteil 27, der beim dargestellten Ausführungsbeispiel Bestandteil des Abstütztellers 18 ist. Der am Sperrhebel 16 vorgesehene Sensorteil 26 befindet sich an einem Hebelarm 36 des Sperrhebels 16 und ist als Stützfläche 26 ausgebildet. Im Ruhezustand (Figuren 2, 4, 5) liegt diese Stützfläche 26 auf einer Schneidekontur 27 auf, welche als zweiter gegenüber dem Gehäuse 1 fixierten Sensorteil am Abstützteller 18 vorgesehen ist. Die Stützfläche 26 wird durch das Restdrehmoment, welches aus der nicht vollständigen Kompensation der Abstützkräfte der Druckfeder 22 in Zug- und Druckrichtung, wie oben beschrieben, resultiert, gegen die Schneidekontur 27 gedrückt. Auf diese Weise wird ein wesentlicher Teil der Sensorik in den Verriegelungsmechanismus integriert.

Um für die Sperrhebel 16 eine definierte Drehachsenfixierung am Bremsrohr 14 zu erhalten, ist ein Ring 17 vorgesehen, von dem die Sperrhebel 16 aufgenommen werden. Dieser Ring 17 ist in bevorzugter Weise als Runddrahtring ausgebildet und kann als radiale Toleranuausgleichsfeder dienen, mit welcher die Sperrhebel 16 an Lagerdurckstellen 43 des Riegelbolzens 9 radial angedrückt werden. Diese Lagerdruckstellen 43 liegen radial außerhalb der Abstützschultern 5 an der äußeren Umfangsfläche des Riegelbolzens 9. Um diese Lagerdruckstellen 43 können die Sperrhebel 16, wie im einzelnen noch erläutert wird, geschwenkt werden (Fig. 11 A-C).

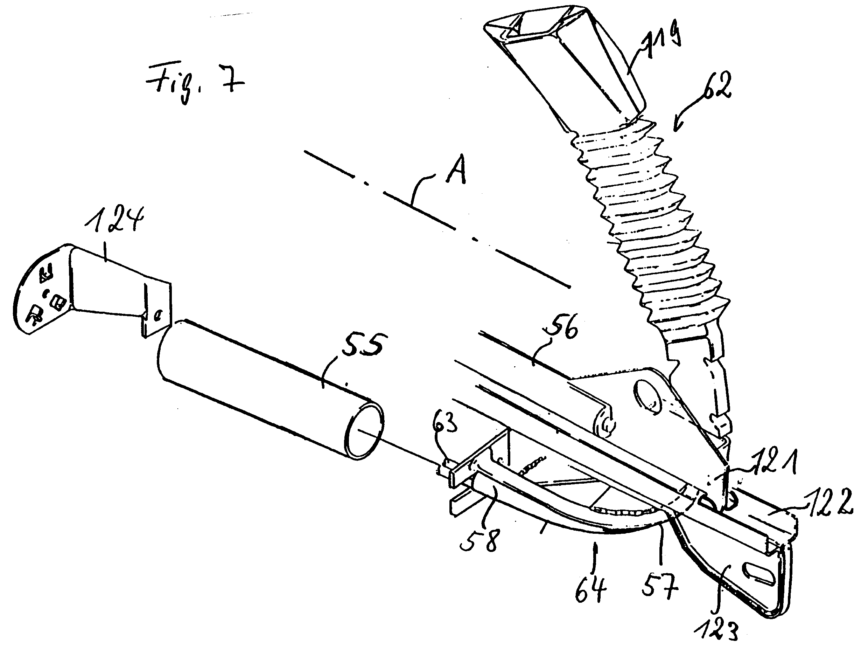

In der Fig. 6 ist eine Ausführungsform des Sperrhebels in Form eines Drehriegelhakens 31 gezeigt, bei welchem der Ring 17 sich zur Drehachsenfixierung des Sperrhebels einsparen läßt.

Um eine definierte Ruhestellung, d.h. eine Vorspannung der Druckfeder 22 in verriegeltem Zustand, wie es die Fig. 2 zeigt, zu erhalten, ist eine in Fig. 3 gezeigte Rückhalteeinrichtung 50 vorgesehen. Diese weist angeformte Rückstellfedern 46 und Zugarme 19 mit angeformten Rückhaltehaken 23 auf. Die Rückstellfedern 46 und Zugarme 19 sind über einen Spreizteil 6 miteiander verbunden, der im Abstützteller 18 verspreizt ist. Die Rückhaltehaken 23 sind in entsprechende Ausnehmungen 7 am Federteller 21 eingesetzt. Durch die so gebildete Rückhalteeinrichtung 50 wird die als Kraftspeicher wirkende Druckfeder 22, die vom Riegelbolzen 9 und den Sperrhebeln 16 gebildete Verriegelungseinrichtung und die von den Stützflächen 26 und Schneidkonturen 27 gebildete Sensorik zu einer Einheit miteinander in der Ruhelage verbunden.

Neben der schon erwähnten Kraftspeicherfunktion besitzt die Druckfeder 22 in der Ruhestellung noch eine zweite Funktion, nämlich sie stellt für die Sensorik eine Trägheitsmasse dar, die bei einer extremen Fahrzeuggeschwindigkeitsänderung, insbesondere im Crashfall, zu einer Massenträgheitsbewegung führt. Das rohrförmige Gehäuse 1 und damit die Druckfeder 22 sind in bevorzugter Weise in Fahrzeugrichtung angeordnet, damit diese Massenträgheitsbewegung im Crashfall, d.h. bei einer plötzlichen Geschwindigkeitssteigerung oder -verminderung stattfinden kann. Da die Druckfeder 22, die Verriegelungseinrichtung und die Sensorik in axialer Richtung, d.h. in Fahrtrichtung hintereinander angeordnet sind, teilt sich diese Masstenträgheitsbewegung unmittelbar auf die Sensorik zum Löschen der Verriegelung mit, die im einzelnen nunmehr erläutert wird (Fig. 11 A-C).

Wie schon ausgeführt, ist die durch den Riegelbolzen 9 und die Sperrhebel 16 gebildete Verriegelung zwischen dem Zugseil 8 bzw. zwischen der Zugseite der Druckfeder 22 und der Druckseite der Druckfeder 22 am Federteller 21 wirksam. Im Crashfall wird aufgrund der Trägheitsmasse, welche die Druckfeder 22 hat, diese eine Massenträgheitsbewegung in Richtung des Pfeiles Z ausführen. Diese Massenträgheitsbewegung wird von der Verriegelung, d.h. von dem Riegelbolzen 9 und den Sperrhebeln 16, welche in den Riegelbolzen eingreifen, mit ausgeführt. Bei dieser Bewegung verlassen die Stützflächen 26 an den Hebelarmen 36 der Sperrhebel 16 die im Gehäuse 1 ortsfest vorgesehenen Flächen der Schneidkonturen 27, die den zweiten Sensorteil bilden, und aufgrund des vorhandenen Restdrehmoments und insbesondere auch aufgrund der nach außen gerichteten schrägen Auflageflächen 42 der Stütznocken 28, an denen die Sperrhebel 16 anliegen, werden die Hebelarme 36 um die Lagerdruckstellen 43 radial nach innen verschwenkt, so daß die Riegelfläche 25 an den Sperrhebeln mit den Abstützschultern bzw. Eingriffschultern 5 am Riegelbolzen 9 nach außen außer Eingriff kommen und damit die Verriegelung gelöst wird (Fig. 11 C). Die gespannte Druckfeder 22 kann sich dann in Rückstrammrichtung (Pfeilrichtung Z in Fig. 2) entspannen, und diese Rückstrammbewegung wird auf das Zugseil 8 übertragen. Das Zugseil 8 überträgt die Rückstrammbewegung über das Sicherheitsgurtschloß, mit welchem das Zugseil 8 verbunden ist, auf den Sicherheitsgurt, so daß eine Gurtlose beseitigt wird.

Damit sich die in den ersten beweglichen Sensorteil bildenden Stützflächen 26 an den Sperrhebeln 16 von den im Gehäuse 1 ortsfest angeordneten Sensorflächen 27 wegbewegen können, ist die Rückhalteeinrichtung 50 in axialer Richtung zum rohrförmigen Schutzgehäuse 1 federnd ausgebildet. Hierzu ist die Rückhalteeinrichtung 50 über Rückstellfedern 46 am Abstützteller 18 abgestützt. Die Rückstellfedern 46 vermitteln in axialer Richtung eine Federkraft, durch welche die Sensorflächen 26 und 27 in ihrer axialen Richtung in Ruhestellung gehalten werden. In dieser Ruhestellung sind die an den Sperrhebeln 16 vorgesehenen beweglichen Sensorflächen 26 gegenüber den ortsfesten Sensorflächen 27 an dem Abstützteller 18 in die Ruhestellung vorgespannt. Durch die von den Rückhaltefedern 46 vermittelte Rückhaltekraft in axialer Richtung läßt sich die Empfindlichkeit der Sensorik einstellen. Beispielsweise wird die Ansprechschwelle der Sensorik auf 12,5 N bei einer Beschleunigung von 6 g durch die Rückstellfedern 46 eingestellt. Im Crashfall bewegen sich die Stützflächen 26 in axialer Richtung gegenüber den ortsfesten Sensorflächen 27 und entfernen sich von diesen, wie schon erläutert wurde.

Ferner können einstückig an den Spreizteil 6 der Rückhalteeinrichtung 50 noch zusätzliche Federn 37 - sogenannte Servofedern - angeformt sein, welche auf die freien Enden der Hebelarme 36 wirken, an denen die Stützflächen 26 vorgesehen sind.

Um eine zur Rückstrammbewegung entgegengesetzt gerichtete Bewegung zu verhindern, ist in Zusammenwirkung mit dem Bremsrohr 14 die oben schon erwähnte Rücklaufsperre mit der Rastellipse 10 vorgesehen. Nach erfolgter Rückstrammung (in Pfeilrichtung Z, Fig. 2) wird auf das Zugseil 8 ein in entgegengesetzter Richtung wirkender Crashzug ausgeübt, bei welchem eine der Rastellipse 10 zugewendete Stirnfläche 35 der Seilverpressung 11 mit der Rastellipse 10 im Bereich der abgerundeten Kante 45 in Berührung kommt und die Rastellipse 10, die an den beiden parallel verlaufenden Seilsträngen 38 und 39 gelagert ist, in der Fig. 2 im Uhrzeigersinn verschwenkt bzw. kippt, so daß die Rastellipse 10 mit ihrem Umfang mit der Innenwand des Bremsrohres 14 in Berührung kommt und aufgrund des entgegengesetzt zur Pfeilrichtung Z wirkenden Zuges in eine Klemm-Raststellung gebracht wird. Hierdurch wird eine stufenlose Rücklaufverriegelung in der jeweiligen durch die Rückstrammbewegung erreichten Auszugstellung ermöglicht. Die Rastellipse 10 kommt dabei einsteuerungsverlustfrei in die erläuterte Klemm-Raststellung. Man erreicht damit mit Hilfe der ohnehin vorhandenen Seilverpressung 11, mit welcher die beiden Seilstränge 8 verpreßt sind, nach erfolgter Rückstrammung unter Ausnützung des gegenläufigen Crashzuges des Zugseiles 8 ohne Verriegelungs-Einsteuerungsweg-Verluste ein Verklemmen der Rastellipse 10 mit der Innenwand des Bremsrohres 14, indem die Stirnfläche 35 der Seilverpressung 11 die Rastellipse in diese Klemmstellung bringt.

Das rohrförmige Gehäuse 1 kann an der einen Stirnseite durch eine Abdeckkappe 20 verschlossen sein. An der anderen Stirnseite, die mit einem Verschluß 44 abgedeckt ist, wird das bevorzugt als Doppelzugseil ausgebildete Zugseil 8 zum nicht näher dargestellten Sicherheitsgurtschloß geführt. Diese Führung erfolgt über Umlenkbleche 3 und 4 (Figuren 1 und 3). Hierdurch wird eine crashsichere Aufnahme der Rückhaltekräfte des Sicherheitsgurtschlosses erreicht. Wie schon erläutert, wird ein sitzintegrierter Schloß-Rückstrammer-Einbau dadurch ermöglicht.

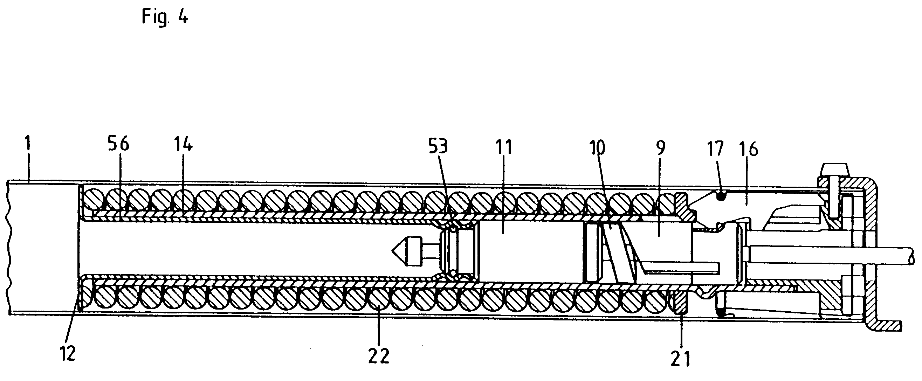

Das in den Figuren 3 und 4 dargestellte Ausführungsbeispiel unterscheidet sich gegenüber den in den Figuren 1, 2 und 5 dargestellten Ausführungsbeispielen im wesentlichen dadurch, daß im Bremsrohr 14 ein Führungsrohr 56 teleskopartig in axialer Richtung verschiebbar angeordnet ist. An das eine Ende des Führungsrohres 56 ist der Federteller 12 angeformt, an welchem das eine Ende der Druckfeder 22 abgestützt ist. Das andere Ende des Führungsrohres 56 ist an einer Verbindungsstelle 53 beispielsweise durch Verpressen mit der Seilverpressung 11 und damit mit dem Zugseil 8 verbunden. Durch das Führungsrohr 56, welches teleskopartig im Bremsrohr 14 geführt ist, wird eine klemmfreie Führung des Führungstellers 12, an welchem die Druckfeder 22 abgestützt ist, innerhalb des rohrförmigen Gehäuses 1 beim Ausdehnen der Zugfeder 22 zur Herbeiführung der Rückstrammbewegung gewährleistet. Ein derartiges Führungsrohr kann auch bei dem Ausführungsbeispiel der Figuren 1 und 2 an den Federteller 12 angeformt sein, wodurch dann ebenfalls eine klemmfreie Führung des Gleitringes 13 und eine klemmfreie Rückstrammbewegung erreicht wird.

Ferner ist beim Ausführungsbeispiel der Figuren 3 und 4 am Riegelbolzen 9 ein Sicherungsstift 47 befestigt, der sich achsparallel duch den Abstützteller 18 hindurch erstreckt. An dem Ende, welches durch den Abstützteller 18 hindurchragt, ist eine Eingriffstelle 48 vorgesehen für einen Sicherungsclip 49. Dieser Sicherungsclip 49 ist mittels Führungslaschen 51 und 52 quer zur axialen Richtung am Abstützteller geführt und kann damit in Eingriff mit der Eingriffstelle 48 gebracht werden oder aus dieser Eingriffstellung wieder gelöst werden. Hierdurch wird die Montage, insbesondere der Zusammenbau der Einzelteile der Sensorik und das Einsetzen der Verrlegelung und der angeformten Sensorik in das Bremsrohr 14, erleichtert. Ferner kann hierdurch eine Sicherung gegen unbeabsichtigtes Auslösen der Sensorik im nicht eingesetzten Fall der Rückstrammereinrichtung erreicht werden.

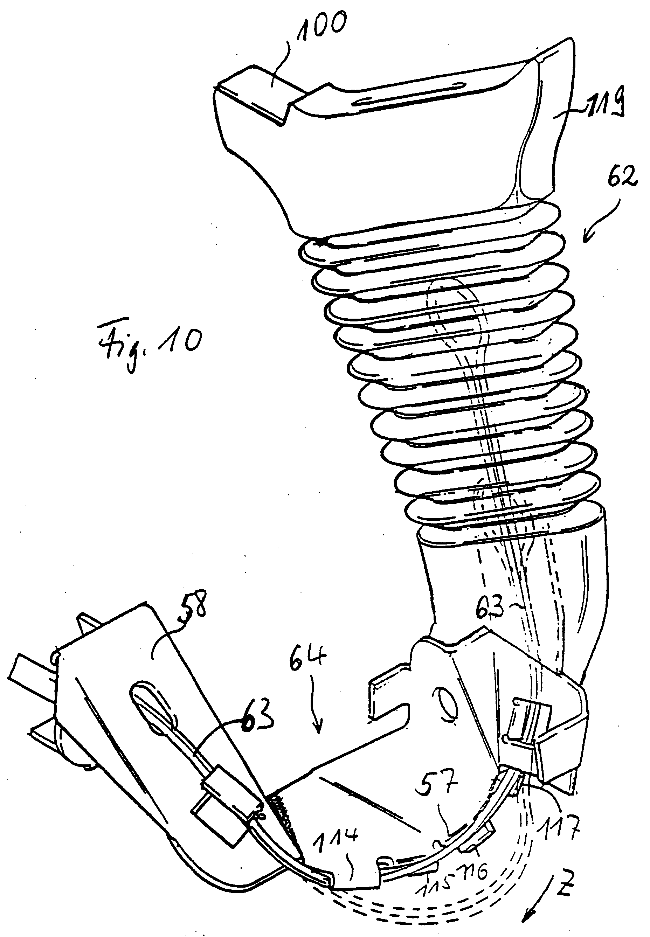

Bei den in den Figuren 7 bis 10 dargestellten Ausführungsbeispielen hat die Seilführungsbahn 57 an dem Umlenkblech 64 einen dreidimensionalen Krümmungsverlauf, der sich im wesentlichen an der Kante des Umlenkbleches 4 erstreckt. Die Seilführungsbahn in den Figuren 8 und 10 wird durch angeformte Umlenkelemente 114 bis 117 gebildet. Diese Umlenkelemente werden durch Stanzen und entsprechendes Umbiegen an der Kante des Umlenkbleches geschaffen. Die Form des Umlenkbleches 64 und seine Befestigung an dem Sitzkonstruktionsteil 56, welches bevorzugt die verschiebbare tunnelseitige Ankerschiene des Fahrzeugsitzes sein kann, ist so, daß die vom Sicherheitsgurt vermittelten, über das Gurtschloß 61 und das Zugseil 63 im Rückstrammschacht 62 übermittelten Rückhaltekräfte aufgenommen werden. Wie aus der Fig. 7 hervorgeht, ist die Rückstrammereinrichtung, und hier insbesondere die Umlenkeinrichtung 64, an einem Befestigungsblech 121 des Sitzkonstruktionsteils 56, welches die obere verschiebbare Ankerschine des Fahrzeugsitzes ist, befestigt. Die verschiebbare Ankerschiene ist in einer unteren Schiene 122, die mit einem Befestigungsblech 123 am Fahrzeugboden befestigt ist, verschiebbar geführt. Auf diese Weise wird auch die gesamte Rückstrammereinrichtung (Rückstrammer 55, Umlenkeinrichtung 64 und Rückstrammschacht 62) zusammen mit dem Sitz mitbewegt. Ferner ist die Rückstrammereinrichtung noch mit einem vorderen Halter 124, an welchem das vordere Ende des Rückstrammers 55 gelagert ist, an der verschiebbaren Ankerschiene 56 befestigt.

Bei dem in der Fig. 9 dargestellten Ausführungsbeispiel ist die Umlenkeinrichtung 64 ebenfalls als Umlenkblech ausgebildet, das die Form eines Führungsrahmens aufweist. Dieser Führungsrahmen besitzt eine äußere Seilführungsbahn, die durch Einformungen in das Blech gebildet wird.

Bei dem in der Fig. 7 dargestellten Ausführungsbeispiel der Umlenkeinrichtung 64 ist die Seilführungsbahn 57 rinnenförmig ausgebildet. Wie die Ausführungsbeispiele zeigen, sind die Seilführungsbahnen 57 jeweils nach einer Richtung hin offen. Hierdurch wird eine Ausweichmöglichkeit für das Zugseil 63 geschaffen, wenn beispielsweise durch Ausübung eines Druckes auf ein Kopfstück 119 des Rückstrammschachtes 62 das Zugseilstück im Rückstrammschacht eine Bewegung ausführt, wie es in Fig. 8 dargestellt ist. In der Fig. 8 ist strichliert die Ausweichmöglichkeit des Zugseiles 63 im Bereich der Umlenkeinrichtung 64 dargestellt. Das bedeutet, daß die Bewegung des Zugseilstückes im Rückstrammschacht 62 sich nicht bis in den Rückstrammer 55 und die dort befindliche Sensorik fortsetzt, so daß eine Fehlauslösung der Sensorik hierdurch vermieden wird. Um eine definierte Auslenkung des Zugseiles 63 im Bereich der Umlenkvorrichtung zu haben, können noch entsprechend angeformte Führungsplatten vorgesehen sein, innerhalb welcher das Zugseil die strichliert dargestellte Ausweichbewegung durchführen kann. Wenn das Kopfstück 119 wieder in seine Ausgangsstellung zurückgekehrt ist, wird auch das Zugseil 63 wieder in die Seilführungsbahn 57 zurückgebracht.

Im Kopfstück 119 der Ausführungsbeispiele der Figuren 7 und 8 ist das Gurtschloß 61 angeordnet. Wie es in der Fig. 8 dargestellt ist, ist das Zugseil 63 mit seinem einen Ende mit dem Gurtschloß 61 verbunden.

Das andere Ende des Zugseiles 63 führt zum Rückstrammer 55, wobei hier das Zugseil 63 etwa parallel zur Fahrzeuglängsachse A verläuft. Mit dem Rückstrammer 55 ist eine Zugseilführung 58 verbunden, die das Zugseil 63 bis zur Umlenkeinrichtung 64 parallel zur Fachzeugachse A führt.

Im Rückstrammer 55 ist das Zugseil 63 mit einem Kraftspeicher, der bevorzugt als Druckfeder ausgebildet ist, verbunden. Der Rückstrammer 55 ist bevorzugt als mechanischer Rückstrammer ausgebildet, wie er schon oben beschrieben ist. In der Ruhestellung wird der Kraftspeicher, insbesondere die Druckfeder, im Rückstrammer 55 unter Vorspannung gehalten, und das Gurtschloß 61 nimmt seine normale, in der Fig. 8 in ausgezogenen Strichen gezeigte Stellung ein. Bei den in den Figuren 7 und 8 dargestellten Ausführungsbeispielen befindet sich das Gurtschloß in einem Kopfteil 119 des Rückstrammschachtes 62. Der Rückstrammschacht dieser Ausführungsbeispiele ist im mittleren Bereich in Richtung der Rückstrammbewegung zusammenschiebbar ausgebildet, während der Rückstrammschacht 62 des Ausführungsbeispiels der Fig. 8 insgesamt ein starres Gehäuse aufweist. Bei der in den Figuren dargestellten Ruhelage der Gurtschlösser kann der Sicherheitsgurt im Hüftpunkt, in welchem das Gurtschloß 61 sich befindet, für den normalen Fahrbetrieb verriegelt werden. Im Falle einer extremen Fahrzeuggeschwindigkeitsänderung (Abbremsung oder Beschleunigung), welche durch einen Unfall bedingt sein kann, zieht der Rückstrammer 55 das Zugseil 63 in Rückstrammrichtung (Pfeilrichtung Z), so daß das Gurtschloß 61 die in der Fig. 8 dargestellte strichlierte Lage einnimmt. Im Falle der Ausführungsbeispiele der Fig. 7 und 8 wird der Rückstrammschacht 62 balgartig zusammengezogen, wobei das Kopfstück 119 mit dem darin angeordneten Gurtschloß eine untere Position einnimmt.

Zum Entriegeln des Gurtschlosses sind in den Ausführungsbeispielen der Figuren getrennt vom Gurtschloß 61 Entriegelungstasten 100 vorgesehen. Mit diesen Entriegelungstasten kann sowohl im normalen Fahrbetrieb als auch bei rückgestrammtem Gurtschloß der nicht näher dargestellte Sicherheitsgurt entriegelt werden. Wie in der Fig. 8 gezeigt ist, ist hierzu mit der Entriegelungstaste 100 eine Betätigungsstange 59, die im Innern des Rückstrammschachtes 62 angeordnet ist, verbunden. Die Betätigungsstange ist starr mit der federnd gelagerten Entriegelungstaste 100 verbunden und ist im Rückstrammschacht 62 axial verschiebbar gelagert. Mit dieser Betätigungsstange 59 ist ferner ein am Gurtschloß 61 in einer Schwenkachse angelenkter Entriegelungshebel 112 verbunden. Beim Drücken der Entriegelungstaste 100 wird diese Bewegung über die Betätigungsstange 59 auf den Entriegelungshabel 112 übertragen, und dieser wirkt bei seiner Schwenkbewegung auf ein Entriegelungselement 111, das an der Außenseite des Gurtschlosses 61 vorgesehen ist. Das Gurtschloß 61 kann in bekannter Weise ausgebildet sein oder beispielsweise die in den DE 39 32 090.1 A1 und DE 40 05 481.0 A1 beschriebenen Konstruktionen, die eine flache Bauweise gewährleisten, aufweisen.

Wie das Ausführungsbeispiel der Fig. 8 zeigt, wird beim Rückstrammen des Gurtschlosses 61 der Entriegelungshebel 112 entlang der Betätigungsstange 59 mitgeführt, so daß auch in rückgestrammtem Zustand eine Entriegelung des Gurtschlosses 61 ermöglicht ist. Dieses Mitführen des Entriegelungshebels 112 wird durch einen am Gehäuse des Gurtschlosses 61 angeformten Hebelmitnehmer 113 gewährleistet.

Der Entriegelungshebel 112 besitzt an seinem freien Ende zwei Klemmfinger 125 und 126, die mit der Betätigungsstange 59 wie folgt zusammenwirken. Wenn beim Rückstrammvorgang das Gurtschloß 61 in der Fig. 8 nach unten in die strichlierte Stellung gezogen wird, werden die beiden Klemmfinger 125 und 126 klemmfrei entlang der Betätigungsstange 59 mitgeführt. Wenn jedoch die Betätigungsstange 59 durch Drücken der Entriegelungstaste 100 in ihrer axialen Richtung nach unten bewegt wird, kommen die beiden Klemmfinger 125 und 126 in Klemmeingriff mit der Betätigungsstange 59, da sie auf einem Kreisbogen um die Anlenkstelle 118 bewegbar sind. Hierdurch wird die axiale Bewegung der Betätigungsstange 59 in eine Schwenkbewegung des Entriegelungshebels 112 umgesetzt, und die Schwenkbewegung des Entriegelungshebels 12 wird auf das Entriegelungselement 111 des Gurtschlosses 61 übertragen.

Wenn beim Loslassen der Entriegelungstaste 100 die Betätigungsstange 59 wieder nach oben sich bewegt, werden die Klemmfinger 125 und 126 mit der Betätigungsstange 59 in die Ausgangslage, welche in der Fig. 8 dargestellt ist, zurückbewegt.

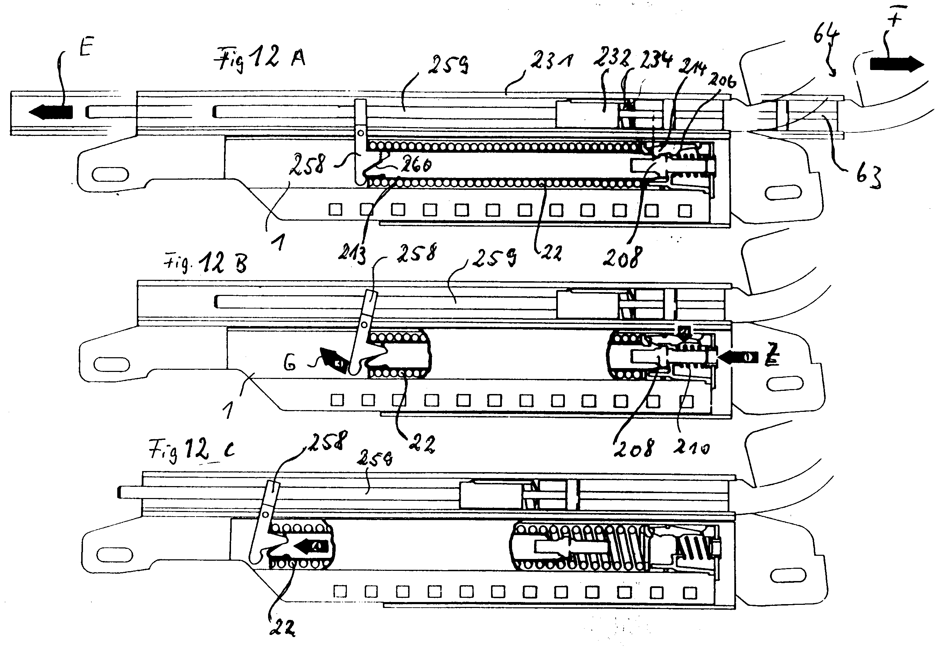

In den Figuren 12 A - 12 C ist eine Ausführungsform dargestellt, bei welcher die Druckfeder 22 und die Rücklaufsperrenanordnung in getrennten rohrförmigen Gehäusen 1 und 231 angeordnet sind. Zur Übertragung der von der entriegelten Druckfeder 22 verursachten Rückstrammbewegung auf das Zugseil 63 wird bei der Ausführungsform der Figuren 12 A bis 12 C ein Kipphebel 258 verwendet, der auf eine Zugstange 259 wirkt. Die Zugstange 259 ist über einen Seilanker 232 mit dem Zugseil 63 verbunden.

Der Kipphebel 258 ist am vorderen Ende der Druckfeder 22 am Führungsrohr 213 über eine Lagerfeder 260 kippbar gelagert. In der in der Fig. 12 A dargestellten Ruheposition, bei welcher die Druckfeder 22 blockiert bzw. verriegelt ist, läßt sich das Bremsrohr 231, welches auch das Gehäuse für die Rücklaufsperre bildet, zusammen mit der Zugstange 259 in Richtung der Pfeile E und F, zusammen mit dem Fahrzeugsitz verstellen. Hierzu kann das Bremsrohr 231 mit der oberen Sitzschiene, die mit dem Fahrzeugsitz verschoben wird, verbunden sein bzw. aus einem Stück mit dieser geformt sein. In der in der Fig. 12 A dargestellten Stellung verschiebt sich dann die Zugstange 259 klemmfrei in einer Ausnehmung im Kipphebel 258, der im wesentlichen senkrecht zur Zugstange 259 angeordnet ist.

Das Gehäuse 1, in welchem die Verriegelungsvorrichtung und die Druckfeder 22 angeordnet sind, ist ortsfest am Fahrzeugchassis befestigt. Beispielsweise kann das Gehäuse 1 an der unteren ortsfesten Schiene der Sitzkonstruktion angeordnet sein oder aus einem Stück mit dieser gefertigt sein.

Sobald die Verriegelungseinrichtung, wie oben im einzelnen schon erläutert wurde, aufgrund äußerer Krafteinwirkung entriegelt wird, expandiert die Druckfeder 22 und bewegt sich ruckartig in Richtung des Pfeiles Z in Fig. 12 B. Hierdurch wird der Kipphebel 258 in seiner Lagerstelle (Lagerfeder 260) in Richtung eines Pfeiles G verschwenkt. In dieser geschwenkten bzw. gekippten Postion (Fig. 12 B) kommt der Kipphebel 258 im Bereich der Ausnehmung, durch welche die Zugstange 259 geführt ist, in Klemmeingriff mit der Zugstange 259. Die Bewegungskomponente Z der Druckfeder 22 wird über den Kipphebel 258 damit auf die Zugstange 259, und somit auf das Zugseil 63, übertragen. Das Zugseil 63 ist mit dem Sicherheitsgurt verbunden, wodurch die von der Druckfeder 22 erzeugte Rückstrammerbewegung auf den Sicherheitsgurt übertragen wird. Zur Beseitigung der gesamten Gurtlose aus dem Sicherheitsgurt bewegt sich die Druckfeder 22 bis in die in der Fig. 12 C dargestellte Endstellung.

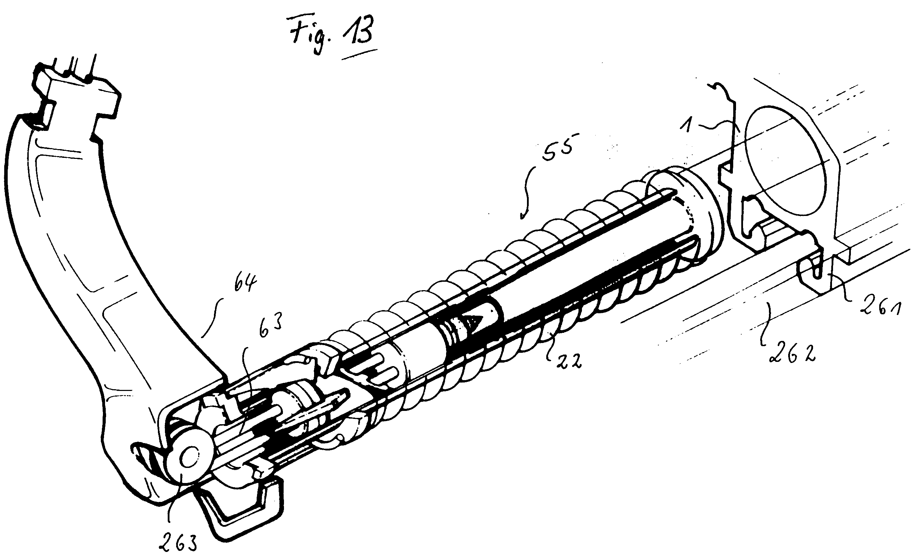

Bei dem in der Fig. 13 dargestellten Ausführungsbeispiel ist die im zusammengebauten Zustand gezeigte Rückstrammereinrichtung 55 in das Gehäuse 1, welches aus einem Stück mit der sitzverstellbaren Oberschiene 261 gebildet ist, einbaubar. Hierzu kann die Rückstrammereinrichtung 55 eine Ausführungsform besitzen, wie sie in den Figuren 1 bis 6 dargestellt ist. Das Zugseil 63 wird in der Umlenkeinrichtung 64 über eine Umlenkrolle 263 umgelenkt und beispielsweise in der im Zusammenhang mit den Figuren 7 bis 10 erläuterten Art und Weise mit dem Schloß eines Sicherheitsgurts verbunden.

## Patentansprüche

1. Vorrichtung zum Straffen eines Sicherheitsgurtes in einem Fahrzeug, insbesondere Kraftfahrzeug, für die Beseitigung einer Gurtlose aus einem angelegten Sicherheitsgurt, mit
- einem Rückstrammer (55), der eine in einem Gehäuse (1) angeordnete Druckfeder (22) aufweist, die im gespannten und durch eine Verriegelungseinrichtung (9, 21, 214) gehaltenen Zustand einen Kraftspeicher für eine die Gurtlose beseitigende Rückstrammbewegungskomponente bildet;
- einer Sensoreinrichtung (22, 26, 27); und
- einem Zugseil (8; 63), das mit dem Rückstrammer (55) und dem Sicherheitsgurt verbunden ist, und die vom Rückstrammer (55) erzeugte Rückstrammbewegungskomponente auf den Sicherheitsgurt überträgt,
dadurch **gekennzeichnet,** daß
- die Sensoreinrichtung (22, 26, 27) die Druckfeder (22) als bewegliche Trägheitsmasse zum Lösen der Verriegelungseinrichtung (9, 21, 214) bei einer extremen Fahrzeuggeschwindigkeitsänderung aufweist;
- beide Enden der Druckfeder (22) an der Verriegelungseinrichtung (9, 21, 214) abgestützt sind und eines der beiden Enden der Druckfeder (22) am Zugseil (8; 63) angreift;
- die gespannte Druckfeder (22) und die Verriegelungseinrichtung im verriegelten Zustand eine Bewegungseinheit bilden;
- die entgegengesetzt gerichteten Abstützkrafte der Druckfeder (22) von dem wenigstens einen Verriegelungselement (214) größtenteils aufgenommen sind;
- an das Verriegelungselement (214) ein Sperrhebel (16) angeformt ist; und
- ein Teil des Sperrhebels als erster Sensorteil (26) ausgebildet ist, der mit einem verbleibenden, ein Entriegelungsmoment bildenden Restdrehmoment gegen einen am Gehäuse (1) ortsfesten zweiten Sensorteil (27) gedrückt ist.

2. Vorrichtung nach Anspruch 1, dadurch gekennzeichnet, daß bei der durch die extreme Fahrzeuggeschwindigkeitsänderung verursachten Bewegung die von Druckfeder (22) und Verriegelungseinrichtung (9, 21, 214) gebildete Bewegungseinheit sich vom zweiten Sensorteil (27) zum Lösen der Verriegelung entfernt.

3. Vorrichtung nach Anspruch 1 oder 2, dadurch gekennzeichnet, daß die Verriegelungseinrichtung (9, 21, 214) einen auf das Zugseil (8; 63) wirkenden Riegelbolzen (9) aufweist, in den in Ruhestellung das wenigstens eine Verriegelungselement (214) eingreift, und daß bei der Bewegung von Druckfeder (22) und Verriegelungseinrichtung das Verriegelungselement (214) um eine Schwenkachse (43) aus der Verriegelungsstellung geschwenkt ist.

4. Vorrichtung nach einem der Ansprüche 1 bis 3, dadurch gekennzeichnet, daß bei voneinander entfernten Sensorteilen (26, 27) die Druckfeder (22) auf die Verriegelungseinrichtung (9, 21, 214) eine entriegelnde Kraft ausübt.

5. Vorrichtung nach einem der Ansprüche 1 bis 4, dadurch gekennzeichnet, daß die Druckfeder (22) als Schraubendruckfeder und das Gehäuse (1) rohrförmig ausgebildet sind und die Druckfeder (22) in axialer Richtung im Gehäuse (1) bewegbar geführt ist.

6. Vorrichtung nach einem der Ansprüche 1 bis 5, dadurch gekennzeichnet, daß die Verriegelungseinrichtung (9, 21, 214) mehrere Verriegelungselemente (214) aufweist, die in gleichen Winkelabständen voneinander um die Achse (A) des rohrförmigen Gehäuses (1) angeodnet sind, und daß zur Festlegung ihrer jeweiligen Drehachsen die Verriegelungshebel (16) durch einen Ring (17) schwenkbar im Gehäuse (1) fixiert sind.

7. Vorrichtung nach Anspruch 6, dadurch gekennzeichnet, daß der Ring (17) federnd ausgebildet ist und das Entriegelungsmoment verstärkt.

8. Vorrichtung nach einem der Ansprüche 1 bis 7, dadurch gekennzeichnet, daß das Zugseil (8; 63) durch eine Rücklaufsperre (10, 14; 231), die in einer zur Rückstrammbewegung entgegengesetzten Bewegungsrichtung sperrend wirkt, gesichert ist.

9. Vorrichtung nach einem der Ansprüche 1 bis 8, dadurch gekennzeichnet, daß die Druckfeder (22) in einem Zwischenraum zwischen der Innenwand des rohrförmigen Gehäuses (1) und dem Außenmantel eines Bremsrohres (14) der Rücklaufsperre (10, 14) angeordnet ist.

10. Vorrichtung nach einem der Ansprüche 1 bis 9, dadurch gekennzeichnet, daß das mit dem Zugseil (8) verbundene Ende der Druckfeder (22) mittels eines im Bremsrohr (14) teleskopartig geführten Führungsrohres (56) geführt ist.

11. Vorrichtung nach einem der Ansprüche 1 bis 10, dadurch gekennzeichnet, daß als Übertragungsmittel der von der entriegelten Druckfeder (22) verursachten Rückstrammbewegung auf das Zugseil (63) ein eine gekippte oder ungekippte Stellung einnehmender Kipphebel (258) vorgesehen ist, an welchem bei verriegelter Druckfeder (22) eine mit dem Zugseil (63) verbundene Zugstange (259) in einer der beiden Stellungen des Kipphebels (258) klemmfrei geführt ist, und welcher bei entriegelter Druckfeder (22) in seiner anderen Stellung mit der Zugstange (259) in Klemmeingriff steht.

12. Vorrichtung nach Anspruch 11, dadurch gekennzeichnet, daß die Zugstange (259) bei ungekippter Stellung des Kipphebels (258) klemmfrei geführt ist und in gekippter Stellung des Kipphebels (258) mit dem Kipphebel (258) in Klemmeingriff steht.

13. Vorrichtung nach einem der Ansprüche 1 bis 12, dadurch gekennzeichnet, daß das Zugseil (8; 63) außerhalb des Gehäuses (1) über eine Seilumlenkeinrichtung (3, 4; 64) zu einem Gurtschloß (61), mit welchem Becken- und Schultergurtbereich im angelegten Zustand des Sicherheitsgurtes verbunden sind, umgelenkt ist.

14. Vorrichtung nach einem der Ansprüche 1 bis 13, dadurch gekennzeichnet, daß
- das Gurtschloß (61) und das direkt mit dem Gurtschloß (61) verbundene Zugseil (63) in einem Rückstrammschacht (62) entlang einer schachtführungsbahn bewegbar geführt sind;
- der Rückstrammschacht (62) mit einer Seilumlenkeinrichtung (4) verbunden ist, die zusammen mit dem Rückstrammer (55) oder der Rücklaufsperre (10, 14) 231) des Rückstrammers (55) an einem mit dem Fahrzeugsitz mitverstellbaren Sitzkonstruktionsteil (56) befestigt ist; und
- von der Seilumlenkeinrichtung (64) Rückhaltekräfte, die durch den Sicherheitsgurt vermittelt und über das Gurtschloß (61) auf das Zugseil (63) übertragen werden, aufgenommen und in den Sitzkonstruktionsteil (56) eingeleitet sind.

15. Vorrichtung nach Anspruch 13 oder 14, dadurch gekennzeichnet, daß die Seilumlenkeinrichtung (64) eine bogenförmige Seilführungsbahn (57) für das Zugseil (63) aufweist und daß die bogenförmige Führungsbahn (57) an der Seilumlenkeinrichtung (64) zwischen einer zur Fahrzeuglängsachse parallelen Zugseilführung (58) und einer zum H-Punkt (Hüftpunkt) im Rückstrammschacht (62) verlaufenden Führungsbahn für das Zugseil (63) und das Gurtschloß (61) angeordnet ist.

16. Vorrichtung nach einem der Ansprüche 13 bis 15, dadurch gekennzeichnet, daß die bogenförmige Seilführungsbahn (57) an der Seilumlenkeinrichtung (64) einen dreidimensionalen Krümmungsverlauf aufweist und entlang einer Kante der als Umlenkblech ausgebildeten Seilumlenkeinrichtung (64) in das Umlenkblech eingeformt ist.

17. Vorrichtung nach einem der Ansprüche 13 bis 16, dadurch gekennzeichnet, daß die Seilführungsbahn (57) in einer zur Richtung der von der Seilführungsbahn aufnehmbaren Kräfte entgegengesetzten Richtung geöffnet ist.

18. Vorrichtung nach einem der Ansprüche 13 bis 17, dadurch gekennzeichnet, daß eine Entriegelungstaste (100) für das Gurtschloß (61) getrennt vom Gurtschloß (61) vorgesehen ist und über einen Betätigungsmechanismus (59, 112) auf einen am Gurtschloß (61) vorgesehenen Entriegelungsteil (111) wirkt.

19. Vorrichtung nach Anspruch 18, dadurch gekennzeichnet, daß parallel zur Rückstrammbewegung des Gurtschlosses (61) im Innern des starr ausgebildeten Rückstrammschachtes (62) eine Betätigungsstange (59) angeordnet ist, die mit der getrennt vom Gurtschloß (61) am Rückstrammschacht (62) vorgesehenen Entriegelungstaste (100) und dem am Gurtschloß (61) vorgesehenen Entriegelungsteil (111) über einen am Gurtschloß (61) angelenkten Entriegelungshebel (112) mit dem Entriegelungsteil (111) verbunden ist, und daß bei der Rückstrammbewegung des Gurtschlosses (61) der Entriegelungshebel (112) entlang der Betätigungsstange (59) mitgeführt ist.

## Claims

1. Apparatus for tightening a safety belt in a vehicle, in particular a motor vehicle, for eliminating belt slack from a fitted safety belt, comprising:
- a belt tightener (55) having a compression spring (22) which is disposed in a housing (1) and which in the stressed condition in which it is held by a locking device (9, 21, 214), forms a force storage means for a tightening motion component for removing the belt slack;
- a sensor device (22, 26, 27); and
- a tension cable (8; 63) which is connected to the belt tightener (55) and the safety belt and which transmits to the safety belt the tightening motion component produced by the belt tightener (55), characterised in that
- the sensor device (22, 26, 27) has the compression spring (22) as a movable inertia weight for releasing the locking device (9, 21, 214) in the event of an extreme change in the speed of the vehicle;
- both ends of the compression spring (22) are supported at the locking device (9, 21, 214) and one of the two ends of the compression spring (22) engages the tension cable (8; 63);
- the stressed compression spring (22) and the locking device, in the locked condition, form a motion unit;
- the oppositely directed support forces of the compression spring (22) are carried for the major part by the at least one locking element (214);
- formed on the locking element (214) is a lock lever (16); and
- a part of the lock lever is in the form of a first sensor portion (26) which, with a remaining residual rotary moment forming an unlocking moment, is pressed against a second sensor portion (27) which is stationary on the housing (1).

2. Apparatus according to claim 1 characterised in that upon the movement caused by the extreme variation in the speed of the vehicle the motion unit formed by the compression spring (22) and the locking device (9, 21, 214) moves away from the second sensor portion (27) to release the locking action.

3. Apparatus according to claim 1 or claim 2 characterised in that the locking device (9, 21, 214) has a lock pin (9) which acts on the tension cable (8; 63) and into which engages the at least one locking element (214) in the rest position, and that upon the movement of the compression spring (22) and the locking device, the locking element (214) is pivoted about a pivot axis (43) out of the locking position.

4. Apparatus according to one of claims 1 to 3 characterised in that when the sensor portions (26, 27) are moved away from each other, the compression spring (22) applies an unlocking force to the locking device (9, 21, 241).

5. Apparatus according to one of claims 1 to 4 characterised in that the compression spring (22) is in the form of a coil compression spring and the housing (1) is of a tubular configuration and the compression spring (22) is guided movably in the housing (1) in the axial direction.

6. Apparatus according to one of claims 1 to 5 characterised in that the locking device (9, 21, 214) has a plurality of locking elements which are arranged at equal angular spacings from each other around the axis (A) of the tubular housing (1) and that to establish their respective axes of rotation the locking levers (16) are pivotably feed in the housing (1) by a ring (17).

7. Apparatus according to claim 6 characterised in that the ring (17) is of a resilient nature and boosts the unlocking moment.

8. Apparatus according to one of claims 1 to 7 characterised in that the tension cable (8; 63) is secured by a reverse motion locking means (10, 14; 231) which has a locking action in a direction of movement which is opposite to the belt tightening movement.

9. Apparatus according to one of claims 1 to 8 characterised in that the compression spring (22) is arranged in an intermediate space between the inside wall of the tubular housing (1) and the outside peripheral surface of a braking tube (14) of the reverse motion locking means (10, 14).

10. Apparatus according to one of claims 1 to 9 characterised in that the end of the compression spring (22), which is connected to the tension cable (8), is guided by means of a guide tube (56) which is telescopically guided in the braking tube (14).

11. Apparatus according to one of claims 1 to 10 characterised in that provided as the transmission means for transmission to the tension cable (63) of the belt tightening movement caused by the unlocked compression spring (23) is a tilting lever (258) which adopts a tilted or an untilted position and on which, when the compression spring (22) is locked, a pull bar member (259) connected to the tension cable (63) is clamping-free guided in one of the two positions of the tilting lever (258) and which when the compression spring (22) is unlocked is in clamping engagement in its other position with the pull bar member (259).

12. Apparatus according to claim 11 characterised in that in the untilted position of the tilting lever (258) the pull bar member is guided in a clamping-free condition and in the tilted position of the tilting lever (258) the pull bar member is in clamping engagement with the tilting lever (258).

13. Apparatus according to one of claims 1 to 12 characterised in that the tension cable (8; 63) is diverted outside the housing (1) by way of a cable diversion device (3, 4; 64) to a belt lock (61) to which lap and shoulder belt regions are connected in the fitted condition of the safety belt.

14. Apparatus according to one of claims 1 to 13 characterised in that
- the belt lock (61) and the tension cable (63) which is directly connected to the belt lock (61) are guided movably in a belt tightening shaft member (62) along a shaft guide path;
- the belt tightening shaft member (62) is connected to a cable diversion device (4) which, together with the belt tightening device (55) or the reverse motion locking means (10, 14; 231) of the belt tightening device (55) is feed to a seat structural member (56) which is also displaceable with the vehicle seat; and
- retaining forces which are imparted by the safety belt and which are transmitted to the tension cable (63) by way of the belt lock (61) are carried by the cable diversion device (64) and applied to the seat structural member (56).

15. Apparatus according to claim 13 or claim 14 characterised in that the cable diversion device (64) has an arcuate cable guide path (57) for the tension cable (63) and that the arcuate guide path (57) is arranged on the cable diversion device (64) between a tension cable guide (58) which is parallel to the longitudinal axis of the vehicle, and a guide path, which goes to the H-point (hip point) in the belt tightening shaft member (62), for the tension cable (63) and the belt lock (61).

16. Apparatus according to one of claims 13 to 15 characterised in that the arcuate cable guide path (57) on the cable diversion device (64) has a three-dimensional curvature configuration and along an edge of the cable diversion device (64) which is in the form of a diversion plate member is formed into the diversion plate member.

17. Apparatus according to one of claims 13 to 16 characterised in that the cable guide path (57) is opened in a direction opposite to the direction of the forces which can be carried by the cable guide path.

18. Apparatus according to one of claims 13 to 17 characterised in that an unlocking button (100) for the belt lock (61) is provided separately from the belt lock (61) and by way of an actuating mechanism (59, 112) acts on an unlocking member (111) provided on the belt lock (61).

19. Apparatus according to claim 18 characterised in that arranged parallel to the belt tightening movement of the belt lock (61) in the interior of the belt tightening shaft member (62) which is of a rigid configuration is an actuating bar member (59) which is connected to the unlocking button (100) provided separately from the belt lock (61) on the belt tightening shaft member (62), and to the unlocking member (111) provided on the belt lock (61), by way of an unlocking lever (112) which is pivotally mounted to the belt lock (61), with the unlocking member (111), and that upon the belt tightening movement of the belt lock (61) the unlocking lever (112) is also guided along the actuating bar member (59).

## Revendications

1. Dispositif tendeur pour une ceinture de sécurité dans un véhicule, et notamment un véhicule automobile, afin de supprimer tout mou lorsque la ceinture de sécurité est mise, comportant
- un tendeur de rappel (55), qui comporte un ressort de pression (22) placé dans un boîtier (1) et constituant, à l'état tendu et maintenu par un dispositif de verrouillage (9, 21, 214), un accumulateur d'énergie pour une composante de mouvement de tension de rappel supprimant le mou de la ceinture ;
- un dispositif détecteur (22, 26, 27) ; et
- un câble de traction (8 ; 63), qui est relié au tendeur de rappel (55) et à la ceinture de sécurité et qui transmet à la ceinture de sécurité la composante de mouvement de tension de rappel, produite par le tendeur de rappel (55),
caractérisé par le fait que
- le dispositif détecteur (22, 26, 27) comporte le ressort de pression (22) en tant que masse d'inertie mobile pour libérer le dispositif de verrouillage (9, 21, 214) dans le cas d'un changement extrême de vitesse du véhicule ;
- les deux extrémités du ressort de pression (22) sont en appui sur le dispositif de verrouillage (9, 21, 214), l'une des deux extrémités du ressort de pression (22) attaque le câble de traction (8 ; 63) ;
- le ressort de pression (22) tendu, et le dispositif de verrouillage constituent, à l'état verrouillé, une unité de mouvement ;
- les forces d'appui du ressort de pression (22), qui sont dirigées en sens opposé, sont, en majeure partie, absorbées par au moins un élément de verrouillage (214) ;
- un levier de blocage (16) est issu de l'élément de verrouillage (214) ; et
- une partie du levier de blocage est réalisée en tant que première pièce détectrice (26), qui est poussée, avec un couple de rotation résiduel, donnant un couple de déverrouillage, sur une deuxième pièce détectrice (27) immobilisée sur le boîtier (1).

2. Dispositif selon la revendication 1, caractérisé par le fait que lors du mouvement provoqué par un changement extrême de vitesse du véhicule, l'unité de mouvement constituée par le ressort de pression (22) et par le dispositif de verrouillage (9, 21, 214) s'éloigne de la deuxième pièce détectrice (27) afin de libérer le verrouillage.

3. Dispositif selon la revendication 1 ou 2, caractérisé par le fait que le dispositif de verrouillage (9, 21, 214) présente un axe (9) de verrouillage agissant sur le câble de traction (8 ; 63) et dans lequel pénètre, en position de repos, ledit au moins un élément de verrouillage (214) et que, lors du mouvement du ressort de pression (22) et du dispositif de verrouillage, l'élément de verrouillage (214) bascule autour d'un axe de basculement (43) hors de la position de verrouillage.

4. Dispositif selon l'une des revendications 1 à 3, caractérisé par le fait que, lorsque les deux pièces détectrices (26, 27) sont éloignées l'une de l'autre, le ressort de pression (22) applique au dispositif de verrouillage (9, 21, 214) une force de déverrouillage.

5. Dispositif selon l'une des revendications 1 à 4, caractérisé par le fait que le ressort de pression (22) est réalisé en tant que ressort de pression hélicoïdal et que le boîtier (1) est de forme tubulaire, le ressort (22) de pression étant guidé avec possibilité de se déplacer dans la direction axiale du boîtier (1).

6. Dispositif selon l'une des revendications 1 à 5, caractérisé par le fait que le dispositif de verrouillage (9, 21, 214) présente plusieurs éléments de verrouillage (214), qui sont repartis équiangulairement autour de l'axe (A) du boîtier tubulaire (1) et que, pour fixer leurs axes de rotation respectifs, les leviers de verrouillage (16) sont par un anneau (17) immobilisés dans le boîtier (1) avec possibilité de basculer.

7. Dispositif selon la revendication 6, caractérisé par le fait que l'anneau (17) est élastique et qu'il renforce le couple de déverrouillage.

8. Dispositif selon l'une des revendications 1 à 7, caractérisé par le fait que le câble de traction (8 ; 63) est maintenu par un dispositif d'arrêt du recul (10, 14 ; 231), qui arrête dans un sens de mouvement opposé au mouvement de tension de rappel.

9. Dispositif selon l'une des revendications 1 à 8, caractérisé par le fait que le ressort de pression (22) est placé dans un intervalle compris entre la paroi intérieure du boîtier tubulaire (1) et la surface latérale extérieure d'un tuyau de frein (14) du dispositif d'arrêt du recul (10, 14).

10. Dispositif selon l'une des revendications 1 à 9, caractérisé par le fait que l'extrémité du ressort de pression (22), qui est reliée au câble de traction (8) est guidée au moyen d'un tube de guidage (56) télescopique du tuyau de frein (14).

11. Dispositif selon l'une des revendications 1 à 10, caractérisé par le fait qu'il est prévu, en tant que moyen de transmission du mouvement de tension de rappel, provoqué par le ressort de pression (22) verrouillé sur le câble de traction (63), un levier basculant (258), qui peut prendre une position basculée ou une position non basculée, sur lequel, lorsque le ressort de pression (22) est verrouillé, un tirant (259) relié au câble de traction (63) est guidé, sans blocage, dans l'une des deux positions du levier basculant (258), et qui, lorsque le ressort de pression (22) est déverrouillé, est en prise de blocage, dans son autre position, avec le tirant (259).

12. Dispositif selon la revendication 11, caractérisé par le fait que le tirant de traction (259) est guidé sans blocage dans la position non basculée du levier basculant (258) tandis que, dans la position basculée du levier basculant (258) elle est en prise de blocage avec le levier basculant (258).

13. Dispositif selon l'une des revendications 1 à 12, caractérisé par le fait que le câble de traction (8 ; 63) est renvoyé, à l'extérieur du boîtier (1), par l'intermédiaire d'un dispositif de renvoi de câble (3, 4 ; 64) à un fermoir de ceinture (61), auquel sont reliées la partie sangle pour le bassin et la partie sangle pour l'épaule, lorsque la ceinture de sécurité est mise.

14. Dispositif selon l'une des revendications 1 à 13, caractérisé par le fait que
- le fermoir de ceinture (61) et le câble de traction (63), relié directement au fermoir de ceinture (61) passent en étant mobiles dans un puits de tension de rappel (62) le long d'un chemin de guidage du puits ;
- le puits de tension de rappel (62) est relié à un dispositif de renvoi de câble (4) qui est fixé, conjointement avec le tendeur de rappel (55) ou avec le dispositif d'arrêt du recul (10, 14, 231) du tendeur de rappel (55), à une pièce (56) de structure de siège, mobile avec le siège du véhicule ; et
- que les forces de retenue, communiquées par la ceinture de sécurité et transmises, par l'intermédiaire du fermoir de ceinture (61) au câble de traction (63), sont transmises par le dispositif de renvoi de câble (64) et appliquées à la pièce de structure de siège (56).

15. Dispositif selon la revendication 13 ou la revendication 14, caractérisé par le fait que le dispositif de renvoi de câble (64) présente un chemin de guidage (57) courbe pour le câble de traction (63) et que le chemin de guidage (57) courbe est situé dans le dispositif de renvoi de câble (64) entre un élément de guidage du câble de traction (58), parallèle à l'axe longitudinal du véhicule, et un chemin de guidage, s'étendant dans le puits de tension de rappel (62), au niveau de la hanche, pour le câble de traction (63) et le fermoir de ceinture (61).

16. Dispositif selon l'une des revendications 13 à 15, caractérisé par le fait que le chemin de guidage de câble (57) courbe dans le dispositif de renvoi de câble (64) présente un tracé de courbure tridimensionnel et qu'il est formé, le long d'un bord du dispositif de renvoi de câble (64), réalisé sous la forme d'une chicane, dans la chicane.

17. Dispositif selon l'une des revendications 13 à 16, caractérisé par le fait que le chemin de guidage de câble (57) est ouvert dans le sens opposé au sens des forces qui peuvent être absorbées par le chemin de guidage de câble.

18. Dispositif selon l'une des revendications 13 à 17, caractérisé par le fait qu'il est prévu une touche de déverrouillage (100) pour le fermoir de ceinture (61), distincte du fermoir de ceinture (61) et agissant, par l'intermédiaire d'un mécanisme d'actionnement (59, 112) sur une pièce de déverrouillage (111) prévue sur le fermoir de ceinture (61).

19. Dispositif selon la revendication 18, caractérisé par le fait qu'une tige d'actionnement (59) est disposée parallèlement au mouvement de tension de rappel du fermoir de ceinture (61), à l'intérieur du puits de tension de rappel (62), réalisé rigide, cette tige étant reliée à la touche de déverrouillage (100), prévue sur le puits de tension de rappel (62) et distincte du fermoir de ceinture (61), et à la pièce de déverrouillage (111), prévue sur le fermoir de ceinture (61), par l'intermédiaire d'un levier de déverrouillage (112), articulé sur le fermoir de ceinture (61) avec la pièce de déverrouillage (111) et que, lors du mouvement de tension de rappel du fermoir de ceinture (61), le levier de déverrouillage (112) est entraîné le long de la tige d'actionnement (59).
